# FASCICULE DE BREVET EUROPEEN

(11) **EP 2 099 005 B1**
(45) Date de publication et mention de la délivrance du brevet: **05.09.2018**
(21) Numéro de dépôt: 09154215.9
(22) Date de dépôt: 03.03.2009
(51) Int. Cl.: G08C 17/00, H04L 12/12, H04L 12/28

(54) **PROCÉDÉ DE COMMUNICATION ENTRE UN PREMIER NOEUD ET UN DEUXIÈME NOEUD D'UNE INSTALLATION DOMOTIQUE.**
KOMMUNIKATIONSVERFAHREN ZWISCHEN EINEM ERSTEN UND EINEM ZWEITEN KNOTEN EINER HEIMANLAGE
METHOD FOR COMMUNICATION BETWEEN A FIRST NODE AND A SECOND NODE OF A HOME-AUTOMATION INSTALLATION.

(30) Priorité: 05.03.2008 FR 0801204
(43) Date de publication de la demande: 09.09.2009
(73) Titulaire: SOMFY ACTIVITES SA, 74300 Cluses (FR)
(72) Inventeur: Augustin, Barbara, 74950 Scionzier (FR); Pellarin, Florent, 74370 Saint Martin Bellevue (FR)
(74) Mandataire: Bugnion Genève

(56) Documents cités:
- EP-A- 1 873 972
- US-A1- 2005 237 984
- US-A1- 2006 025 181
- NIYATO D ET AL: "Wireless sensor networks with energy harvesting technologies: a game-theoretic approach to optimal energy management" IEEE WIRELESS COMMUNICATIONS, IEEE SERVICE CENTER, PISCATAWAY, NJ, US, vol. 14, no. 4, 1 août 2007 (2007-08-01), pages 90-96, XP011191783 ISSN: 1536-1284

## Description

L'invention concerne le domaine des communications dans un réseau domotique comprenant une pluralité de noeuds devant communiquer les uns avec les autres. Elle porte sur un procédé de communication entre différents noeuds, sur des noeuds mettant en oeuvre un tel procédé ainsi que sur un réseau comprenant de tels noeuds. L'invention se rapporte enfin à un module logiciel régissant un fonctionnement d'un ou plusieurs noeuds conformément au procédé de communication.

Ces noeuds correspondent généralement à des équipements électriques domotiques tels que des actionneurs, des commandes de charges électriques, des automatismes de commande tels que des capteurs ou points de commande à distance. Ces noeuds comprennent des émetteurs et/ou des récepteurs d'ordres. En particulier dans des réseaux domotiques sans fil dans lesquels la communication se fait par des média électromagnétiques (ondes radiofréquences par exemple), ils comprennent des émetteurs et/ou des récepteurs d'ordres sans fil.

L'invention s'applique en particulier à des noeuds dits autonomes, c'est-à-dire comprenant leur propre source d'énergie. Cette source d'énergie peut être une batterie. Du fait de cette autonomie, il est nécessaire de garantir une consommation minimale pour économiser les ressources limitées.

Par ailleurs, la problématique de réduction de consommation pour des équipements alimentés par le secteur est également à considérer. En particulier, la consommation de veille de ces équipements, c'est-à-dire la consommation liée uniquement à un état de veille, par exemple dans l'attente d'une information ou d'un ordre de commande, gagne à être réduite.

Par ailleurs, il peut s'avérer utile, selon les fonctions assurées par les noeuds, de pouvoir joindre un des noeuds autonomes, de manière impromptue.

Divers documents de l'état de la technique renseignent sur différentes méthodes visant à réduire la consommation globale d'un sous-ensemble d'un réseau domotique comprenant une partie émettrice et une partie réceptrice, c'est-à-dire principalement la consommation de la partie réceptrice, notamment dans un état de veille.

Dans un fonctionnement classique, la partie réceptrice, si elle est laissée en écoute permanente d'un éventuel message, consomme une grande partie des ressources énergétiques.

Une première solution consiste à alterner des phases de veille et des phases de réveil de cette partie réceptrice, calculés de sorte que le récepteur puisse intercepter un message qui lui serait adressé.

Une deuxième solution consiste à prévoir un dispositif de réveil à faible consommation, permettant de rendre la partie réceptrice sensible à un signal de réveil. Lorsqu'un tel signal est identifié, le dispositif de réveil déclenche un réveil total de la partie réceptrice en vue de traiter le signal complet. Après un intervalle de temps donné, la partie réceptrice se rendort. De tels dispositifs sont décrits dans les documents US 5,790,946 ou EP 0 317 007.

Pour ces deux solutions, la consommation est alors moins élevée mais cependant non compatible avec une durée de vie élevée des batteries, contrairement aux spécifications de certaines applications.

Ces principes ont cependant l'avantage, comme dans le cas classique défini précédemment, de rendre possible la communication entre deux noeuds, sans délai observable par l'utilisateur.

La demande de brevet WO 2006/006116 concerne une solution alternative, dans laquelle un récepteur est activé à une fréquence donnée et informe un émetteur de cette fréquence. Ainsi, l'émetteur et le récepteur peuvent se synchroniser pour communiquer à intervalles donnés. Dans une telle synchronisation horaire, largement utilisée dans de nombreux systèmes de communication nécessitant une consommation très faible, le récepteur n'est donc joignable qu'au moment des échanges prévus.

La demande de brevet US 2004/0077383 décrit un système de communication bidirectionnelle sans fil entre deux équipements autonomes. Le premier émet à l'attention du deuxième des messages d'événements, qui lui signalent qu'il peut venir collecter des informations. Une solution pour joindre un des premiers équipements consiste à prévoir un temps d'écoute fixe au niveau du premier équipement suite à l'émission du message d'événement en attente d'une réponse de la part du deuxième équipement.

Cette solution n'est pas satisfaisante, car le temps d'écoute systématique à la suite de chaque communication est le plus souvent non nécessaire et représente un gaspillage d'énergie.

D'autres documents, comme par exemple la demande EP 1 033 832 concernent la diminution de la consommation de stations mobiles autonomes. En particulier dans ce document, les stations mobiles se réveillent de manière périodique et vérifient la réception de messages indicateurs dits "Traffic Indicator Messages" ou TIM indiquant la présence de messages de données en mémoire d'une station maître, qui doivent leur être adressés. A la réception d'un message indicateur qui lui est destiné ou destiné à l'ensemble des stations, une station mobile attend en mode réveil qu'un ou plusieurs messages de données lui soient transmis. Le message indicateur TIM peut comprendre la quantité de messages de données en mémoire et/ou le ou les destinataires. Ces dispositions permettent à chaque station mobile de gérer au mieux sa consommation, c'est-à-dire notamment son temps de réveil.

Ce document concerne cependant essentiellement les équipements autonomes qui ont parmi leurs fonctions principales celle de venir vérifier si on cherche à les joindre.

La demande EP1873972 concerne l'utilisation d'un élément de substitution qui mémorise les informations émises à l'attention d'un autre élément destinataire, et qui les lui retransmet lorsqu'il est en période d'écoute.

La demande US20050237984 quant à elle, propose un moyen de gérer l'émission des données stockées en fonction de leur priorité.

A l'inverse, dans un système domotique, des points de commande ou des capteurs envoient une certaine quantité d'information à un noeud associé à un actionneur, celui-ci prenant éventuellement en compte ces informations pour agir. Ces informations prennent la forme de mesures, d'ordres ou de signalisation d'un événement. Elles peuvent être émises de manière régulière ou sans régularité, par exemple sur apparition d'un événement détecté par le capteur. La mission principale de ces noeuds de communication est de fournir de l'information, non d'en recevoir, et ceci reste vrai s'ils comprennent une fonction de réception.

Dans le cadre des systèmes de communication bidirectionnels, chaque noeud de communication est en effet à la fois récepteur et émetteur. Un noeud de communication associé à un actionneur émet, suite à une information reçue, un message de retour confirmant notamment qu'il a bien reçu l'information. Si l'information provient d'un point de commande, et correspond par exemple à un ordre de commande suite à une action d'un utilisateur, le message de retour d'information informe le point de commande de la prise en compte de l'ordre reçu et/ou du changement d'état éventuel du dispositif commandé. Ce sont donc les capteurs et points de commande qui prennent l'initiative de la communication et fournissent principalement l'information.

En dehors de cet échange, pour des raisons d'économies d'énergie, la partie réceptrice du capteur et/ou du point de commande est non-active. S'il est nécessaire de joindre ces noeuds, une option consiste à exécuter une action physique sur ceux-ci pour réveiller leur partie réceptrice. Or, les capteurs notamment peuvent être placés dans des endroits difficiles d'accès et donc une telle action se révèle compliquée. La mise en oeuvre de certaines des solutions présentées précédemment peut également être applicable mais ces solutions ne sont pas complètement satisfaisantes, notamment du point de vue de l'autonomie.

Le but de l'invention est de fournir un procédé de communication remédiant à ces inconvénients et améliorant les procédés de communication connus de l'art antérieur. En particulier, l'invention se propose d'améliorer les systèmes de communication existants, de manière à réduire au maximum la consommation d'énergie des noeuds autonomes, c'est-à-dire disposant de leur source propre et fournissant de l'information au système domotique. Néanmoins, l'invention permet de joindre à distance une partie réceptrice d'un noeud alors même que l'activité de cette partie réceptrice est réduite au temps minimum nécessaire pour chaque communication.

Le procédé de communication selon l'invention est défini par la revendication 1.

Différents modes d'exécution du procédé sont définis par les revendications 2 à 10.

Selon l'invention, le noeud de communication est défini par la revendication 11.

Différents modes de réalisation du noeud de communication sont définis par les revendications 12 à 13.

Selon l'invention, l'installation domotique est définie par la revendication 14.

Les dessins annexés représentent, à titre d'exemple, des modes d'exécution du procédé de communication selon l'invention et un mode de réalisation d'un réseau domotique mettant en oeuvre le procédé de communication selon l'invention.
La figure 1 est un schéma d'un mode de réalisation d'un réseau domotique selon l'invention.
Les figures 2a et 2b sont des schémas représentant deux variantes d'un premier mode d'exécution du procédé de communication selon l'invention.
La figure 3 est un schéma représentant un deuxième mode d'exécution du procédé de communication selon l'invention.
La figure 4 est un schéma représentant un troisième mode d'exécution du procédé de communication selon l'invention.

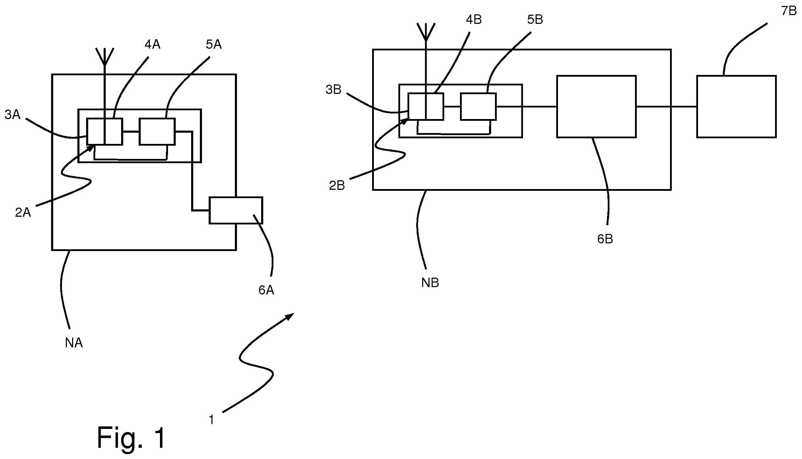

Le réseau domotique 1, représenté à la figure 1, comprend principalement un premier noeud NA et un deuxième noeud NB. Les deux noeuds sont destinés à communiquer avec d'autres noeuds du réseau. En particulier, les premier et deuxième noeuds sont destinés à communiquer entre eux. Ils comprennent chacun un émetteur-récepteur 2A, 2B incluant une partie émettrice 3A, 3B pour émettre des signaux et une partie réceptrice 4A, 4B pour recevoir des signaux. La communication est par exemple assurée par un média sans fil tel que des ondes électromagnétiques et, notamment des ondes radioélectriques. Par exemple, le premier noeud NA correspond à un capteur mesurant et/ou évaluant un paramètre ambiant grâce à une sonde 6A. Le deuxième noeud NB correspond à un équipement domotique tel qu'un actionneur comprenant un motoréducteur 6B et pilotant le déplacement d'un élément mobile 7B comme un store. Les signaux émis par le premier noeud de communication NA et reçus par le deuxième noeud de communication NB sont des ordres de commande d'un équipement ou des messages d'information relatifs au paramètre ambiant (par exemple "vent présent", "soleil absent", "seuil dépassé") destinés à l'équipement. En retour, les signaux émis par le deuxième noeud et reçus par le premier noeud sont majoritairement des accusés de réception et/ou des accusés d'exécution.

Chaque noeud comprend, en connexion avec les parties émettrices et réceptrices, une unité logique de traitement 5A, 5B. Ces ou certaines de ces unités logiques de traitement peuvent comprendre des moyens d'activation et de désactivation des parties réceptrices. Elles peuvent aussi comprendre des moyens de déclenchement d'émissions par les parties émettrices. Ces unités logiques de traitement comprennent des moyens logiciels de définition d'un fonctionnement des noeuds conforme au procédé de communication selon l'invention. En particulier, les unités logiques de traitement comprennent des moyens logiciels de mise en oeuvre des étapes essentielles du procédé de communication selon l'invention. Elles comprennent notamment un moyen de détection de la présence ou de l'absence d'une information dans un signal reçu, un moyen d'interprétation de cette information ou d'interprétation de son absence et un moyen de commande d'activation ou de désactivation de la partie réceptrice. Les moyens logiciels comprennent des programmes informatiques.

Chaque noeud comprend également une connexion à une source d'alimentation. Le premier noeud NA est un noeud autonome, c'est-à-dire qu'il dispose de sa propre source d'alimentation (par exemple un moyen de stockage d'énergie électrique alimenté grâce à un panneau de cellules photovoltaïques). Le deuxième noeud NB n'est pas nécessairement autonome. Il peut être alimenté par le secteur. En revanche, l'invention s'applique également au cas où le deuxième noeud NB ou l'ensemble des noeuds est autonome.

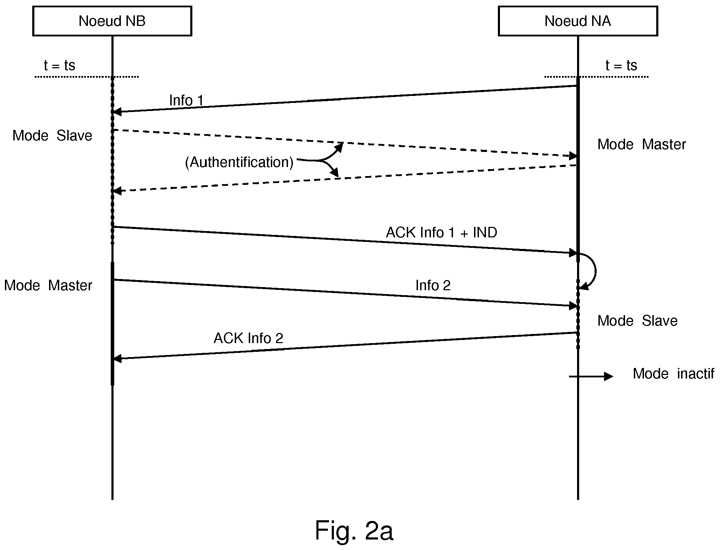

Dans un exemple de procédé de communication selon l'invention et illustré à la figure 2a, le premier noeud NA correspond à un capteur météorologique et envoie des informations régulièrement à l'attention d'un actionneur ou d'un point de commande correspondant au deuxième noeud NB, celui-ci mettant alors en oeuvre si nécessaire une gestion particulière de l'élément piloté. Par exemple, si le premier noeud NA signale un vent supérieur à un seuil prédéfini, le point de commande ou l'actionneur correspondant au deuxième noeud NB fait en sorte de replier le store si celui-ci est déplié (éventuellement dans le cas du point de commande par une commande spécifique vers un actionneur) ou se place dans un mode dans lequel il ne répond pas à un ordre manuel de déploiement du store.

Alternativement, si le premier noeud NA est un capteur de luminosité et/ou solaire et signale un seuil de luminosité important, le point de commande ou l'actionneur (deuxième noeud NB) décide de déployer le store tandis qu'un troisième noeud NL (non représenté) lié à une lampe contribue à couper l'alimentation de la lampe dont le fonctionnement n'est plus nécessaire.

Les noeuds NA et NB sont dits appairés, c'est-à-dire qu'ils ont échangé, lors d'une phase de configuration du réseau domotique ou de l'installation domotique, des informations leur permettant par la suite de s'adresser des messages dédiés. La phase de configuration peut également comprendre une étape de définition d'une synchronisation, cette étape étant importante voire nécessaire dans le cas où les deux noeuds NA et NB sont autonomes. Une fois configurés, les noeuds communiquent ainsi de manière synchronisée, c'est-à-dire qu'à échéance fixe, le premier noeud NA émet un message à destination du deuxième noeud NB qui s'est placé sur écoute. A l'instant t = ts, le premier noeud NA émet un premier signal comprenant un message d'information Info1 à destination du deuxième noeud NB. Lorsque celui-ci le reçoit, il est dans un mode dit esclave « Mode Slave », c'est-à-dire que le deuxième noeud NB est prêt à exécuter un certain nombre de programmes en fonction de l'information reçue du premier noeud NA. Ce dernier est inversement en mode maître « Mode Master » à ce niveau de la communication, c'est-à-dire qu'il dirige la communication (il l'initie, transmet les informations nécessaires au fonctionnement de l'installation).

Si le deuxième noeud NB n'est pas un noeud autonome, sa partie réceptrice peut être activée suivant un schéma prédéfini de manière à limiter la consommation du noeud mais à réagir aux messages en provenance du premier noeud NA, que ceux-ci soient émis de manière régulière ou sur événement. Ce mode de réalisation ne change pas le fait que le premier noeud NA est difficile à joindre, voire aggrave le problème en particulier dans le cas où le noeud n'émet des signaux qu'irrégulièrement, sur détection d'un événement.

Un échange d'information consécutif peut avoir lieu pour permettre une authentification des noeuds communiquant, si ceux-ci ont, au préalable, lors de la configuration de l'installation et de l'appairage, échangé une clé d'authentification ou de cryptage. Cet échange connu dans l'état de l'art, n'est pas détaillé ici, mais simplement représenté par deux flèches en pointillés.

A la suite de cet échange, le deuxième noeud NB confirme au premier noeud NA qu'il a bien reçu et compris le message Info1 par l'envoi d'un signal noté ACK Info1.

Dans l'état de l'art, soit cette confirmation clôt la séquence de communication, soit, et notamment dans un système de communication entre un émetteur et un récepteur, la communication est systématiquement suivie par une période d'une durée prédéfinie au cours de laquelle le premier noeud NA récepteur du signal de confirmation ACK Info 1 reste à l'écoute d'un éventuel message.

Ici, lorsque nécessaire, un indicateur IND de poursuite de conversation est fourni par le deuxième noeud NB dans le signal ACK Info1. Cet indicateur peut être contenu dans la trame ou fourni dans une trame séparée tout de suite avant ou liée à la trame du signal ACK Info1.

En l'absence de l'indicateur dans la trame ACK Info1, la partie réceptrice du premier noeud NA retourne dans un état inactif.

La présence de cet indicateur fait passer le premier noeud NA du mode maître à un mode esclave, dans lequel il attend une information. En effet, l'indicateur signale au premier noeud NA que le deuxième noeud NB veut entrer en communication spécifique avec lui. La réception de cet indicateur indique également au premier noeud NA qu'il doit rester sur écoute afin de poursuivre la conversation.

Le deuxième noeud NB change également de mode : il passe du mode esclave au mode maître dans lequel il prend l'initiative des messages émis. Il peut alors transmettre au premier noeud NA un signal contenant un second message d'information Info2. Si nécessaire, ce message est authentifié, comme expliqué ci-dessus (les échanges d'authentification ne sont pas représentés ici ou par la suite). La réception du second message d'information Info2 est alors suivie d'un signal de confirmation ACK Info 2, cette fois du premier noeud NA vers le deuxième noeud NB. A l'issue de celui-ci, la conversation prend fin et le premier noeud NA, ainsi qu'éventuellement le deuxième noeud NB, passent dans un mode inactif en attendant la prochaine période de communication fixée par la synchronisation entre les deux noeuds ou par le schéma d'écoute du deuxième noeud NB.

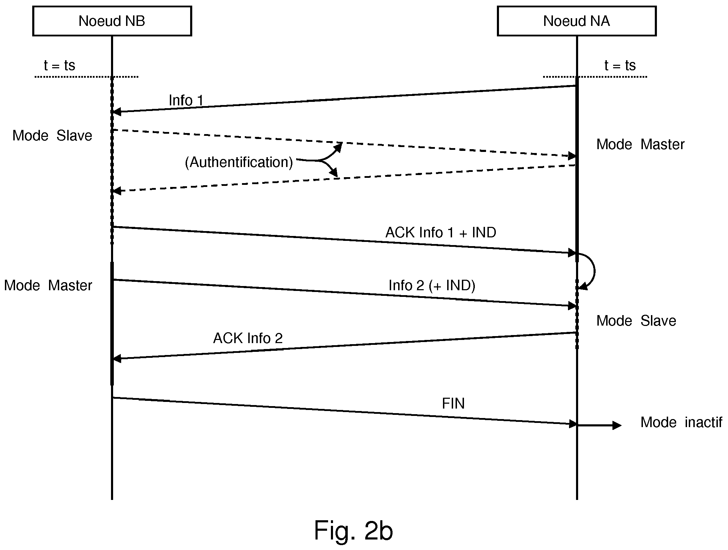

Comme représenté à la figure 2b, le message d'information Info2 peut lui-même comprendre un indicateur IND de poursuite de communication dans le cas où un ou plusieurs autres messages doivent encore être transmis par le deuxième noeud NB vers le premier noeud NA.

Préférentiellement, les indicateurs ou les trames qui les accompagnent comprennent une indication sur la quantité de messages à suivre ou sur la durée pendant laquelle le noeud récepteur de l'indicateur doit encore rester en écoute pour permettre la poursuite de la communication. Lorsque l'ensemble des messages est transmis sans nouvel indicateur de poursuite de communication ou à l'issue de la période nécessaire à la transmission de tous les messages, le premier noeud NA passe automatiquement dans un mode inactif, dans lequel il ne consomme plus d'énergie à écouter si un signal lui est destiné. Alternativement, le deuxième noeud NB émet en fin de communication une trame comprenant un indicateur de fin de communication. Cette trame peut être la dernière trame d'information ou une trame indépendante. Dans ce cas alternatif, le premier noeud NA attend cet indicateur avant de basculer dans l'état inactif.

Alternativement, la présence de la seconde information Info 2 dans la trame du signal de confirmation ACK Info1 peut elle-même faire office d'indicateur de poursuite de conversation. Il n'est pas nécessaire alors d'émettre un nouveau message du deuxième noeud NB vers le premier noeud NA. Ceci s'applique également pour la suite des exemples décrits.

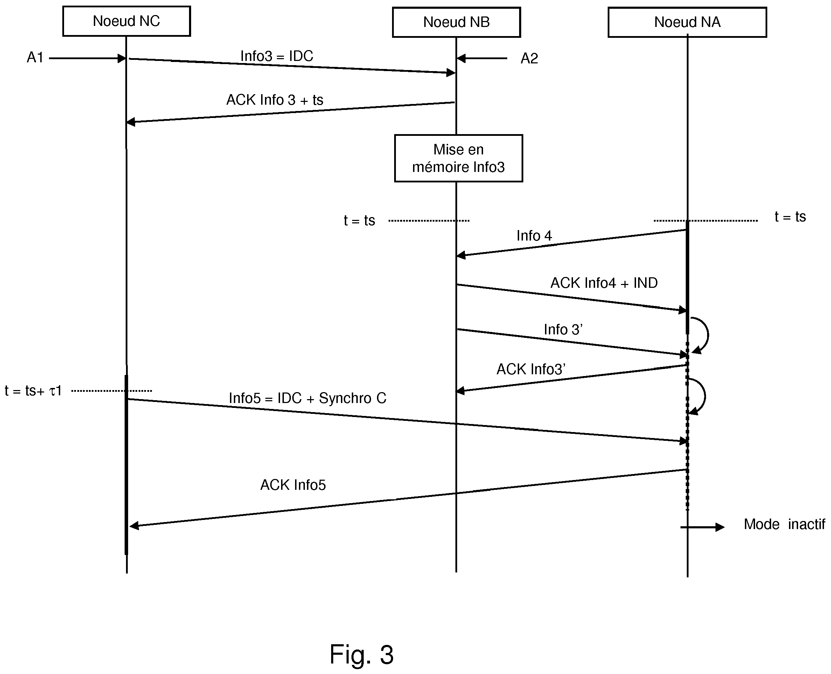

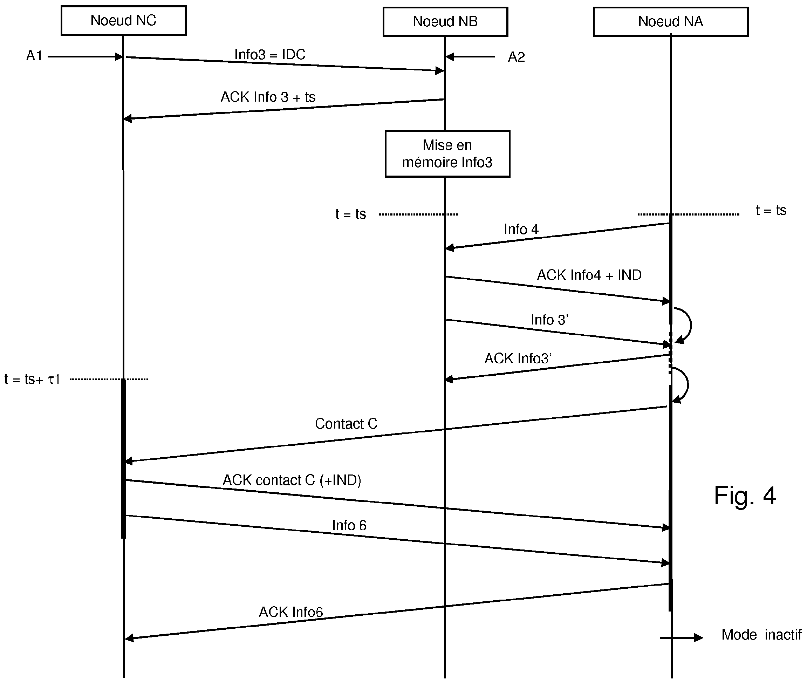

Dans d'autres exemples de procédé de communication selon l'invention illustrés aux figures 3 et 4, un troisième noeud NC est introduit dans l'installation et cherche à entrer en communication avec le premier noeud NA. Celui-ci n'étant en mode actif (émission et écoute) que pendant un temps très restreint, juste nécessaire aux communications prédéfinies, il est alors très difficile pour un nouveau noeud d'établir une nouvelle relation. Ceci est particulièrement vrai dans le cas où le premier noeud NA est difficile d'accès, ce qui est le cas par exemple d'un noeud correspondant à un capteur de vent installé sur une toiture, ou correspondant à un capteur intégré dans un boîtier hermétique.

Le deuxième noeud NB correspondant par exemple à un point de commande ou à un actionneur peut être plus facilement accessible, directement s'il s'agit d'un point de commande et par l'intermédiaire d'un point de commande associé s'il s'agit d'un actionneur. L'installateur connaissant les relations existant entre les noeuds va utiliser la relation entre les noeuds NA et NB pour la création d'une nouvelle relation entre les noeuds NA et NC.

Le noeud NC, comme le deuxième noeud NB, peut être un noeud autonome ou non. L'exemple suivant décrit le mode de réalisation le plus contraignant, c'est-à-dire lorsque le noeud NC est également autonome.

Une action A1 au niveau du noeud NC suivie conjointement d'une action A2 au niveau du deuxième noeud NB permet de placer ces deux noeuds dans un mode de communication. Le noeud NC émet alors à l'attention du deuxième noeud NB un signal traduisant un troisième message d'information Info3. Celui-ci contient par exemple un identifiant caractéristique du noeud émetteur NC. Le message Info3 peut également contenir une information sur le type de noeud avec lequel le noeud NC cherche à entrer en relation (par exemple le premier noeud NA). Ainsi, si le deuxième noeud NB est appairé avec plusieurs autres noeuds, il lui est possible de déterminer avec lequel d'entre eux le noeud NC cherche à communiquer.

Le deuxième noeud NB retourne au noeud NC, à la réception du troisième message Info3, un message de confirmation ACK Info3, ainsi qu'un certain nombre d'informations susceptibles de permettre d'établir ultérieurement une relation avec le premier noeud NA. Parmi les informations peut se trouver une durée ts relative au temps de synchronisation, permettant au noeud NC d'identifier la période pendant laquelle le premier noeud NA à joindre est à l'écoute.

L'information contenue dans le troisième message d'information est mise en mémoire au niveau du deuxième noeud NB. Lorsque celui-ci reçoit un signal traduisant un quatrième message d'information Info 4 de la part du premier noeud NA, conformément à la fréquence de communication établie entre ces deux noeuds, le deuxième noeud NB retourne un message de confirmation ACK Info4, avec un indicateur IND de poursuite de conversation. La présence de cet indicateur fait basculer le premier noeud NA du mode maître au mode esclave comme précédemment. Il est alors à l'écoute d'une information transmise par le deuxième noeud NB. Celui-ci transmet alors un signal Info3' incluant le troisième message d'information Info3, au moins partiellement et éventuellement sous une forme modifiée. Le premier noeud NA dispose alors de l'identifiant du noeud NC, ce qui va lui permettre d'identifier un message en provenance de ce noeud.

Comme dans les différentes communications précédentes, le premier noeud NA retourne un message de confirmation ACK Info3' au deuxième noeud NB pour lui signaler la bonne réception du troisième message Info3'.

La présence de l'indicateur dans le signal de confirmation précédent ACK Info4 et des caractéristiques d'un nouveau noeud provoque également la poursuite de l'écoute du premier noeud NA au delà de la communication avec le deuxième noeud NB. Dans le même but, le message Info3' peut alternativement comprendre un indicateur de poursuite de communication.

Dans un premier exemple d'application illustré à la figure 3, le noeud NC émet après un temps t = ts + τ1 un signal traduisant un cinquième message d'information Info 5. La différence de temps τ1 par rapport au temps de synchronisation ts permet de prendre en compte le temps d'une communication entre les noeuds NA et NB.

Le cinquième message d'information est destiné au premier noeud NA. Comme ce dernier a reçu par l'intermédiaire d'un noeud connu NB les caractéristiques du noeud NC, il est disposé à accepter un message contenant ces caractéristiques, de manière à créer un nouvel appairage ou éventuellement à modifier des paramètres de communication.

Ce cinquième message d'information Info5 comprend par exemple l'identifiant du noeud NC ainsi qu'un temps de synchronisation SynchroC auquel le noeud NC propose de communiquer avec le premier noeud NA.

Si cette nouvelle synchronisation lui convient, le premier noeud NA peut confirmer la prise en compte des nouveaux paramètres par un message ACK Info5. Sinon, la conversation peut se poursuivre tant que nécessaire jusqu'à ce que les deux noeuds se soient mis d'accord.

A l'issue de cette communication, le premier noeud NA retourne dans un état inactif.

Dans un deuxième exemple d'application illustré à la figure 4, à partir d'un temps t = ts + τ1, le noeud NC se place sur écoute dans l'attente d'un message qui lui est adressé. Suite au message de confirmation du troisième message ACK Info3, le premier noeud NA émet signal traduisant un nouveau message ContactC à destination du nouveau noeud NC dans l'installation et contenant au moins l'identifiant de celui-ci. Ce message peut également contenir l'identifiant du premier noeud NA émetteur. Cette prise de contact est suivie d'un message de confirmation ACK ContactC et d'un échange d'information Info 6 entre le premier noeud NA et le noeud NC : un sixième message d'information Info6 contient par exemple un nouveau temps de synchronisation proposé par le premier noeud NA. Le noeud NC confirme et termine l'échange par un message de confirmation ACK Info6.

Ce deuxième exemple est caractérisé par l'action du premier noeud NA en mode maître, tandis que le noeud NC se place dans un mode esclave et attend les instructions de la part du premier noeud NA.

A l'inverse, dans l'exemple de la figure 3, le premier noeud NA fonctionne en mode esclave lors de ses échanges avec le noeud NC qui est alors en mode maître.

Ces schémas de communication ont l'avantage de permettre la mise en place de nouvelles relations entre des noeuds autonomes dont le temps d'écoute est réduit au strict nécessaire. En effet, dans l'exemple décrit à la figure 3, il est tout à fait possible que les trois noeuds NA, NB, NC soient des noeuds autonomes à écoute réduite. Le procédé s'applique alternativement si les noeuds sont alimentés en permanence, mais que l'on souhaite réduire le plus possible les temps d'écoute et de veille.

L'un ou l'autre de ces exemples pourra être utilisé en fonction de la configuration de l'installation. D'autres types d'échanges sont également possibles entre les différents noeuds une fois le noeud à joindre placé dans l'état actif.

Grâce au procédé selon l'invention, la première partie réceptrice n'est pas sollicitée plus longtemps que nécessaire. Le temps d'écoute n'est pas fixe, mais se réduit au temps de réception du message de retour d'information en l'absence de poursuite de communication, et est uniquement augmenté de la durée nécessaire à la communication ultérieure dans le cas contraire.

Le procédé est avantageusement mis en oeuvre dans une communication synchronisée à fréquence donnée et partagée entre le premier et le deuxième noeud. Cependant, elle pourrait tout à fait être mise en oeuvre dans le cadre d'un noeud disposant d'une fonction de réveil (par exemple possédant un récepteur basse consommation, apte à réveiller la partie réceptrice pour la prise en compte totale du signal) ou dans d'autres formes de communication. Dans ce cas, la partie réceptrice limite son temps de réveil dans la plupart des cas et accepte de rester éveillé si nécessaire, suite à une communication.

Le choix entre l'une ou l'autre des stratégies pour entrer en contact avec un noeud autonome est alors double : soit par émission d'un signal de réveil, soit par poursuite d'une communication existante.

## Revendications

1. Procédé de communication entre un premier noeud (NA), un deuxième noeud (NB) et un troisième noeud (NC) d'une installation domotique (1), le procédé comprenant les étapes suivantes :
- émission d'un premier signal depuis une première partie émettrice (3A) du premier noeud vers une deuxième partie réceptrice (4B) du deuxième noeud,
- suite à la réception du premier signal par le deuxième noeud, émission d'un deuxième signal depuis une deuxième partie émettrice (3B) du deuxième noeud vers une première partie réceptrice (4A) du premier noeud, le deuxième signal comprenant un signal (ACK Info1) confirmant au premier noeud que le premier signal a bien été reçu et compris,
- mise à l'état inactif ou maintien à l'état actif de la première partie réceptrice en fonction d'une information, contenue dans le deuxième signal reçu par le premier noeud, informant le premier noeud qu'un troisième noeud (NC) souhaite entrer en contact avec lui, la première partie réceptrice restant à l'écoute d'un signal comprenant des informations permettant d'établir un contact entre le premier noeud (NA) et le troisième noeud (NC).

2. Procédé de communication selon la revendication 1, **caractérisé en ce que** l'information comprend un indicateur signalant au premier noeud que de nouveaux signaux vont être émis à son attention.

3. Procédé de communication selon l'une des revendications précédentes, **caractérisé en ce que** l'indicateur signale une quantité de données à recevoir ou une durée pendant laquelle la première partie réceptrice doit être maintenue à l'état actif.

4. Procédé de communication selon l'une des revendications précédentes, **caractérisé en ce que** la partie réceptrice passe à l'état inactif
- en l'absence d'un indicateur de maintien à l'état actif dans le deuxième signal ou
- suite à la réception d'un message signalant la fin de la communication entre les noeuds.

5. Procédé de communication selon l'une des revendications précédentes, **caractérisé en ce qu'**une partie d'un ensemble de données transmise dans le deuxième signal constitue une information selon laquelle la première partie réceptrice doit rester à l'état actif, le reste de l'ensemble de données étant transmis dans un ou plusieurs signaux postérieurs au deuxième signal.

6. Procédé de communication selon l'une des revendications précédentes, **caractérisé en ce que** l'émission d'un signal par la première partie émettrice est synchronisée avec une phase d'écoute de la deuxième partie réceptrice.

7. Procédé de communication selon la revendication précédente, **caractérisé en ce que** le premier noeud prend contact avec le troisième noeud.

8. Procédé de communication selon la revendication précédente, **caractérisé en ce que** l'état actif comprend un premier mode d'écoute pendant une première période prédéterminée puis un deuxième mode d'écoute, par exemple un mode d'écoute basse consommation, pendant une deuxième période prédéterminée.

9. Ensemble d'au moins trois noeuds (NA, NB, NC) de communication comprenant des moyens matériels (2A, 2B, 3A, 3B, 4A, 4B, 5A, 5B) et/ou logiciels, **caractérisé en ce qu'**un premier noeud (NA) et un second noeud (NB) sont appairés, et **en ce que** ledit second noeud (NB) informe le premier noeud (NA) qu'un troisième noeud (NC) souhaite entrer en contact avec lui, conformément au procédé de communication selon l'une des revendications précédentes.

10. Ensemble de noeuds de communication selon la revendication 9, **caractérisé en ce que** les moyens matériels comprennent une partie émettrice (3A, 3B), une partie réceptrice (4A, 4B) et une unité logique de traitement (5A, 5B).

11. Ensemble de noeuds de communication selon la revendication 9 ou 10, **caractérisé en ce que** l'un ou plusieurs des noeuds est autonome en énergie.

12. Ensemble de noeuds selon l'une des revendications 9-11, **caractérisé en ce que** le premier noeud est un capteur apte à détecter un événement.

13. Noeud selon la revendication précédente, **caractérisé en ce que** l'événement est de type météorologique.

14. Installation domotique (1) comprenant l'ensemble d'au moins trois noeuds de communication selon l'une des revendications 9 à 13.

## Patentansprüche

1. Verfahren zur Kommunikation zwischen einem ersten Knoten (NA), einem zweiten Knoten (NB) und einem dritten Knoten (NC) einer Hausautomationsanlage (1), umfassend die Schritte:
- Senden eines ersten Signals vom ersten Knoten an einen zweiten Empfänger (4B) des zweiten Knotens durch einen ersten Sender (3A),
- im Anschluss an den Empfang des ersten Signals durch den zweiten Knoten, Senden eines zweiten Signals an einen ersten Empfänger (4A) des ersten Knotens durch einen zweiten Sender (3B), wobei das zweite Signal ein Signal (ACK Info1) umfasst, das dem ersten Knoten bestätigt, dass das erste Signal gut empfangen und verstanden worden ist,
- Deaktivieren oder Aufrechterhalten der Aktivation des ersten Empfängers in Abhängigkeit einer Information, die im durch den ersten Knoten empfangenen zweiten Signal enthalten ist, die dem ersten Knoten mitteilt, dass ein dritter Knoten (NC) mit ihm in Kontakt treten will, wobei der erste Empfänger auf ein Signal wartet, dass Informationen enthält, die eine Kontaktaufnahme zwischen dem ersten Knoten (NA) und den dritten Knoten (NC) ermöglichen.

2. Kommunikationsverfahren nach Anspruch 1, **dadurch gekennzeichnet, dass** die Information einen Indikator enhält, der dem ersten Knoten mitteilt, dass weitere Signale an ihn gesendet werden.

3. Kommunikationsverfahren nach einem der vorstehenden Ansprüche, **dadurch gekennzeichnet, dass** der Indikator eine zu empfangende Datenmenge oder einen Zeitraum, in dem der erste Empfänger aktiv zu halten ist, angibt.

4. Kommunikationsverfahren nach einem der vorstehenden Ansprüche, **dadurch gekennzeichnet, dass** der Empfänger in den inaktiven Zustand übergeht,
- wenn im zweiten Signal kein Indikator über die Aufrechterhalten der Aktivation enthalten ist oder
- eine Nachricht empfangen wird, aus der das Ende der Kommunikation zwischen den Knoten hervorgeht.

5. Kommunikationsverfahren nach einem der vorstehenden Ansprüche, **dadurch gekennzeichnet, dass** ein Teil einer im zweiten Signal gesendeten Datengruppe eine Information darstellt, wonach der erste Empfänger im aktiven Zustand bleiben muss, wobei der Rest der Datengruppe in mindestens einem an das zweite Signal anschließenden Signal übersendet wird.

6. Kommunikationsverfahren nach einem der vorstehenden Ansprüche, **dadurch gekennzeichnet, dass** das Senden eines Signals durch den ersten Ender mit einer Wartephase des zweiten Empfängers synchronisiert ist.

7. Kommunikationsverfahren nach einem der vorstehenden Ansprüche, **dadurch gekennzeichnet, dass** der erste Knoten mit dem dritten Knoten Kontakt aufnimmt.

8. Kommunikationsverfahren nach dem vorstehenden Anspruch,
**dadurch gekennzeichnet, dass** der aktive Zustand einen ersten Abhörmodus in einem ersten vorgegebenen Zeitraum, gefolgt durch einen zweiten Abhörmodus, z.B. einen Abhörmodus mit geringem Energieverbrauch, in einem zweiten vorgegebenen Zeitraum, umfasst.

9. Gruppe von mindestens drei Kommunikationsknoten (NA, NB, NC), umfassend Hard- (2A, 2B, 3A, 3B, 4A, 4B, 5A, 5B) und/oder Software, **dadurch gekennzeichnet, dass** in einem Verfahren nach einem der vorstehenden Ansprüche ein erster Knoten (NA) und ein zweiter Knoten (NB) gepaart sind, und dass der zweite Knoten (NB) dem ersten Knoten (NA) mitteilt, dass ein dritter Knoten (NC) mit ihm in Kontakt treten will.

10. Gruppe von Kommunikationsknoten nach Anspruch 9, **dadurch gekennzeichnet, dass** die Hardware einen Sender (3A, 3B), einen Empfänger (4A, 4B) und einen Prozessor (5A, 5B) umfasst.

11. Gruppe von Kommunikationsknoten nach Anspruch 9 oder 10, **dadurch gekennzeichnet, dass** mindestens einer der Knoten über eine selbständige Energieversorgung verfügt.

12. Gruppe von Kommunikationsknoten nach einem der Ansprüche 9-11, **dadurch gekennzeichnet, dass** der erste Knoten geeignet ist, ein Ereignis zu erkennen.

13. Knoten nach dem vorstehenden Anspruch, **dadurch gekennzeichnet, dass** das Ereignis meteorologisch ist.

14. Haushaltsautomationsanlage (1), umfassend die Gruppe von mindestens drei Kommunikationsknoten nach einem der Ansprüche 9 - 13.

## Claims

1. A method of communication between a first node (NA), a second node (NB) and a third node (NC) of a home-automation installation (1), the method comprising the following steps:
- emission of a first signal from a first emitting part (3A) of the first node to a second receiving part (4B) of the second node,
- following reception of the first signal by the second node, emission of a second signal from a second emitting part (3B) of the second node to a first receiving part (4A) of the first node, the second signal comprising a signal (ACK Info1) confirming to the first node that the first signal has been well received and understood,
- placing the first receiving part in the inactive state or maintaining it in the active state as a function of an information contained in the second signal received by the first node, thereby informing the first node that a third node (NC) wishes to get in contact with it, the first emitting part remaining listening for a signal comprising information making it possible to establish a contact between the first node (NA) and the third node (NC).

2. The method of communication as claimed in claim 1, **characterized in that** the information comprises an indicator signaling to the first node that new signals will be transmitted for its attention.

3. The method of communication as claimed in one of the preceding claims, **characterized in that** the indicator signals a quantity of data to be received or a duration for which the first receiving part must be maintained in the active state.

4. The method of communication as claimed in one of the preceding claims, **characterized in that** the receiving part toggles to the inactive state
- in the absence of an indicator of maintenance in the active state in the second signal, or
- following the reception of a message signaling the end of the communication between the nodes.

5. The method of communication as claimed in one of the preceding claims, **characterized in that** a part of a data set sent in the second signal constitutes an information according to which the first receiving part must remain in the active state, the remainder of the data set being sent in one or more signals posterior to the second signal.

6. The method of communication as claimed in one of the preceding claims, **characterized in that** the transmission of a signal by the first transmitting part is synchronized with a phase of listening of the second receiving part.

7. The method of communication as claimed in the preceding claim, **characterized in that** the first node makes contact with the third node.

8. The method of communication as claimed in the preceding claim, wherein the active state comprises a first mode of listening during a first predetermined period then a second mode of listening, for example a low consumption listening mode, during a second predetermined period.

9. Assembly of at least three communication nodes (NA, NB, NC) comprising hardware means (2A, 2B, 3A, 3B, 4A, 4B, 5A, 5B) and/or software means **characterized in that** a first node (NA) and a second node (NB) are paired, and **in that** the said second node (NB) informs the first node (NA) that a third node (NC) wishes to enter into contact with it, according to the method of communication according to any one of the preceding claims.

10. Assembly of communication nodes according to claim 9, **characterized in that** the hardware means comprise an emitting part (3A, 3B), a receiving part (4A, 4B) and a logic processing unit (5A, 5B).

11. Assembly of nodes according to any one of claims 9-10, **characterized in that** one or several of the nodes are self-powered.

12. Assembly of nodes according to any one of claims 9-11, **characterized in that** the first node is a sensor arranged for detecting an event.

13. Node according to the preceding claim, **characterized in that** the event is of meteorological type.

14. A home-automation installation (1) comprising an assembly of at least three communication nodes according to any one of claims 9 to 13.
